# EUROPEAN PATENT APPLICATION

(11) **EP 1 698 234 A1**
(43) Date of publication of application: **06.09.2006**
(21) Application number: 04807425.6
(22) Date of filing: 21.12.2004
(51) Int. Cl.: A23L 1/10, A23L 1/172, A23L 1/16, A23L 1/01, A21D 2/36, A21D 8/00

(54) **FOODS CONTAINING LARGE AMOUNT OF FUNCTIONAL COMPONENTS AND METHOD OF PRODUCING THE SAME**

(30) Priority: 22.12.2003 JP 2003424744; 14.06.2004 JP 2004175698
(71) Applicant: Sapporo Breweries Limited, Tokyo 150-8522 (JP)
(72) Inventor: KIHARA, Makoto, c/o SAPPORO BREWERIES LIMITED, Nitta-Machi, Nitta-Gun, Gunma 370-0393 (JP); OKADA, Yoshihiro, c/o SAPPORO BREWERIES LIMITED, Nitta-Machi, Nitta-Gun, Gunma 370-0393 (JP); ISHIKAWA, Osamu, c/o SAPPORO BREWERIES LIMITED, Nitta-Machi, Nitta-Gun, Gunma 370-0393 (JP); ITO, Kazutoshi, c/o SAPPORO BREWERIES LIMITED, Nitta-Machi, Nitta-Gun, Gunma 370-0393 (JP)
(74) Representative: Billington, Lawrence Emlyn
(86) International application number: PCT/JP2004/019068
(87) International publication number: WO 2005/060766

(57) **Abstract**

Processing methods that provide food or food materials including high functional ingredients contents are disclosed. By using seeds of one or more of wheat, barley, oats and rye soaked in water or hot water, or the processed products of germinated barley or malt as food materials, without using functional ingredients like amino acids as additives, functional ingredients contents like

GABA or targeted other free amino acids in foods are increased during the manufacturing process of foods.

Also, for not only food or food products with processed products of one or more of wheat, barley, oats and rye but also food or food products with non-processed wheat, barley, oats and rye or food or food products with usual raw material of grains, it is provided that food or food products included high functional ingredients contents or their processing methods by controlling the manufacturing process of food or food products.

By including processed product of one or more of wheat, barley, oats and rye like soaked products of malt or germinated barley or seeds of one or more of wheat, barley, oats and rye which are controlled with the germination day depending on the targeted free amino acids or dietary fibers to foods materials, free amino acids contents or GABA content can be increased during the fermentation process or the aging process of the manufacturing process of food or food products. As a result, food or food products including increased free amino acids and GABA contents without using amino acids or GABA as additives and their manufacturing processes are provided. Also, functional ingredients contents are increased by controlling temperature during the fermentation process or the aging process for manufacturing food or food products with non-processed barley like barley flour in usual materials of foods (not using processed products of one or more of wheat, barley, oats and rye), or food or food products with usual materials of grains.

## Description

### BACKGROUND OF THE INVENTION

### 1. Field of the Invention

This invention generally relates to food or food products including high functional ingredients contents which are manufactured with processed products of one or more of wheat, barley, oats and rye including lots of functional ingredients such as free amino acids or dietary fibers or non-processed products of one or more of wheat, barley, oats and rye as food materials, or which are manufactured during the food processing with original grain materials. In more detail, this invention relates to food which receives increased high functional ingredients contents during the food processing with above contents or with original grain materials and their processing method.

### 2. Description of the Related Art

Recently and continuing, health food products are becoming very popular, and food using functional ingredients such as amino acids or dietary fibers as a part of materials of food additives are attracting attention and new health food products have been selling in the marketplace.

It is reported that amino acids have various functions and an improvement of functions and quality of food can be achieved by using them as food additives within food products. For example, valine is used for improving the flavor of various food products. Also, in recent years, health is such an interesting topic for us, that functional food materials including various amino acids have been developed and are newly arrived in the marketplace. Also, recently, gamma-aminobutyric acid, called GABA, is also becoming highly popular. It is widely found in nature and it is one type of amino acid; its chemical formula is NH₂CH₂CH₂CH₂COOH. It is known that GABA acts as a neurotransmitter of a restraint system in the human body. In addition, it is known that GABA acts in depressing blood pressure, stabilizing the mind of human beings, improving kidney and liver functions, and promoting alcohol metabolism.

Dietary fibers have various functions like operations to keep the bowels well-conditioned and restraint operations against high sugar levels in blood. So, water products including dietary fibers are manufactured.

It is well-known by persons who are practiced in the art that processed products of grains, which are germinated grains such as germinated unpolished rice as a food material, include lots of these functional ingredients for richness. For example, see patent documents 1 and 2.

For example, it is reported that 10 mg of GABA can be obtained from 80 g of germinated unpolished rice, which amounts to a cup of rice. (For example, see patent document 1) Also, there are materials for food or food itself which have increased alanine and GABA by germinating miscellaneous cereals or grains including miscellaneous cereals. For example, see patent document 2.

On the other hand, concerning wheat, barley, oats and rye among the grains, wheat and rye are used widely as food materials such as bread, soba (Japanese noodles), udon (Japanese noodles), and pasta. Also, barley is germinated, processed into so-called malt, and used as a raw material for brewing such as beer, low-malt beer and whiskey. Also, malt flour which is crushed malt is used for fermentation promotion at the time of bread production. For example, see non-patent document 1.

Moreover, it is well-known by persons who are practiced in the art that as food material including functional ingredients, germinated wheat contains amino acids as functional ingredients, oats contain β-glucan as a dietary fiber, and barley contains functional ingredients of free amino acids and dietary fibers (β-glucan).

However, according to research by the present inventors, in the case of adding processed products of one or more of wheat, barley, oats and rye (like seeds soaked in water or hot water, germinated wheat, barley, oats and rye or malt) as one of materials or additives to the food processing, it is recognized that functional ingredients contents depend on their amount included or their processing conditions of temperature and a large increase or decrease of functional ingredients contents occurs. Also, there is a tendency of different change rates (that is, the functional ingredient A content is increasing, but the functional ingredient B content is decreasing) according to the individual functional ingredient. It is recognized that the most suitable processing method needs to be selected depending on which functional ingredient is to be high in content. Here, processing conditions include soaking time in water or warm water of barley seeds, the germination days of barley, dry (roasted dry) temperature and time, and extraction temperature and time in the case of functional ingredients that are extracted from barley seeds and germinated barley. Also, there are various enzymes in barley and it is needed to inhibit activity of these enzymes because activity of enzymes could change the food's original physical properties and its quality depending on the food materials which are used.

These problems are common to wheat, barley, oats and rye, not limited to only barley.
Patent document 1: JP2003-250512
Patent document 2: JP2003-159017
Non-patent document 1: Briggs, Malt and Malting, 1998, p.9

### SUMMARY OF THE INVENTION

It is a general object of the present invention to provide food or food products or their processing method for not only foods with processed products of one or more of wheat, barley, oats and rye or non-processed wheat, barley, oats and rye but also foods with usual raw material of grains, in which functional ingredients content like GABA or other free amino acids in foods is increased by controlling any part of their manufacturing process.

In order to achieve the above-mentioned object, as described in claim 1, there is provided a food or food products using grains as materials,
characterized in that functional ingredients contents are increased by controlling manufacturing conditions in at least one step during a manufacturing process of the food or food products.

According to claim 1, for food or food products using grains as usual materials, for example, without adding amino acids as additives, functional ingredients (like GABA or free amino acids) contents are increased by controlling manufacturing conditions in at least one step during a manufacturing process of the food or food products.

Additionally, in the food or food products as claimed in claim 1, one of wheat, barley, and soba as said grains is the material.

According to claim 2, for food or food products including wheat, barley, or soba as grains, for example, without adding amino acids as additives, functional ingredients (like GABA or free amino acids) contents can be increased.

In order to achieve the above-mentioned object, as described in claim 3, there is provided a food or food products using one or more of wheat, barley, oats and rye, or processed products of one or more of wheat, barley, oats and rye,
characterized in that functional ingredients contents are increased by controlling manufacturing conditions in at least one step during a manufacturing process of the food or food products.

According to claim 3, for a food or food products including processed products of one or more of wheat, barley, oats and rye (for example, barley malt), without adding amino acids as additives, functional ingredients (like GABA or free amino acids) contents can be increased by controlling manufacturing conditions in at least one step during a manufacturing process of the food or food products.

Additionally, as for the food or food products as claimed in any one of claims 1-3, said food or foods products are one of bread, pasta, udon and soba.

According to claim 4, for foods like bread, pasta, udon and soba, for example, without adding amino acids as additives, functional ingredients (like GABA or free amino acids) contents can be increased.

Additionally, in the food or foods products as claimed in any one of claims 1-4, the manufacturing process is a kneading process.

According to claim 5, during the kneading process, functional ingredients (like GABA or free amino acids) contents can be increased. For not only food using usual materials of grains but also food including the processed product of one or more of wheat, barley, oats and rye (for example, barley malt), without adding amino acids as additives, a food or food products, in which functional ingredients (like GABA or free amino acids) contents is increased and the kneading process is included in the manufacturing process of the food or food products like breads.

Additionally, in the food or foods products as claimed in any one of claims 1-4, the manufacturing process is a fermentation process.

According to claim 6, during the fermentation process, functional ingredients (like GABA or free amino acids) contents can be increased. For not only food using usual materials of grains but also food including the processed product of one or more of wheat, barley, oats and rye (for example, barley malt), without adding amino acids as additives, a food or food products, in which functional ingredients (like GABA or free amino acids) contents is increased and the fermentation process is included in the manufacturing process of the food or food products like breads.

Additionally, in the food or foods products as claimed in any one of claims 1-4, the manufacturing process is an aging process.

According to claim 7, during the aging process, functional ingredients (like GABA or free amino acids) contents can be increased. For not only food using usual materials of grains but also food including the processed product of one or more of wheat, barley, oats and rye (for example, barley malt), without adding amino acids as additives, a food or food products, in which functional ingredients (like GABA or free amino acids) contents are increased and the aging process is included in the manufacturing process of the food or food products like breads.

Additionally, in the food or foods products as claimed in any one of claims 3-7, wherein said processed products of the one or more of wheat, barley, oats and rye is soaked seeds of the one or more of wheat, barley, oats and rye in water or hot water, a germinated seed of the one or more of wheat, barley, oats and rye depending on germination time, or malt, in which malt seed of the one or more of wheat, barley, oats and rye are soaked in water or hot water to be germinated, then a drying process or a roast-dry process is performed.

According to claim 8, by using the soaked seeds of the one or more of wheat, barley, oats and rye in water or hot water, a germinated seed of the one or more of wheat, barley, oats and rye depending on germination time, or malt, in which malt seed of the one or more of wheat, barley, oats and rye are soaked in water or hot water to be germinated is produced, then a drying process or a roast-dry process is performed, without adding amino acids as additives, so that functional ingredients (like GABA or free amino acids) contents are increased by controlling manufacturing conditions in at least one step during a manufacturing process of the food or food products.

In order to achieve the above-mentioned object, as described in claim 9, there is provided a method of processing of food or food products using grains as materials,
characterized in that functional ingredients contents are increased by controlling manufacturing conditions in at least one step during a manufacturing process of the food or food products.

According to claim 9, for example, without adding amino acids as additives, functional ingredients (like GABA or free amino acids) contents are increased by controlling manufacturing conditions in at least one step during a manufacturing process of the food or food products.

In order to achieve the above-mentioned object, as described in claim 10, there is provided a method of processing a food or food products using one or more of wheat, barley, oats and rye, or processed products of the one or more of wheat, barley, oats and rye,
characterized in that functional ingredients contents are increased by controlling manufacturing conditions in at least one step during a manufacturing process of the food or food products.

According to claim 10, without adding amino acids as additives, a method of processing of a food or food products including processed products using one or more of wheat, barley, oats and rye (like barley malt), in which functional ingredients (like GABA or free amino acids) contents are increased by controlling manufacturing conditions in at least one step during a manufacturing process of the food or food products, can be provided.

Additionally, in the method of processing of the food or foods products as claimed in claims 9 or 10, the manufacturing process is a kneading process.

According to claim 11, during the kneading process, functional ingredients (like GABA or free amino acids) contents can be increased. That is, for not only food using usual materials of grains but also food including the processed product of one or more of wheat, barley, oats and rye (for example, barley malt), without adding amino acids as additives, a food or food products, in which functional ingredients (like GABA or free amino acids) contents are increased.

Additionally, in the method of processing the food or food products as claimed in claim 9 or 10, the manufacturing process is a fermentation process.

According to claim 12, during the fermentation process, functional ingredients (like GABA or free amino acids) contents can be increased. That is, for not only food using usual materials of grains but also food including the processed product of one or more of wheat, barley, oats and rye (for example, barley malt), without adding amino acids as additives, a food or food products, functional ingredients (like GABA or free amino acids) contents are increased.

Additionally, in the method of processing the food or food products as claimed in claim 9 or 10, the manufacturing process is an aging process.

According to claim 13, during the aging process, functional ingredients (like GABA or free amino acids) contents can be increased. That is, for not only food using usual materials of grains but also food including the processed product of one or more of wheat, barley, oats and rye (for example, barley malt), without adding amino acids as additives, a food or food products, functional ingredients (like GABA or free amino acids) contents are increased.

Additionally, in the method of processing of the food or foods products as claimed in any one of claims 10-13, wherein said processed products of one or more of wheat, barley, oats and rye is a soaked seeds of the one or more of wheat, barley, oats and rye in water or hot water, a germinated seed of the one or more of wheat, barley, oats and rye depending on germination time, or malt, in which seed of the one or more of wheat, barley, oats and rye are soaked in water or hot water to be germinated, then a dry process or a roast-dry process is performed.

According to claim 14, by using any one of the seeds of the one or more of wheat, barley, oats and rye soaked in water or hot water, a germinated seed of the one or more of wheat, barley, oats and rye depending on germination time, or malt, in which malt seed of the one or more of wheat, barley, oats and rye are soaked in water or hot water to be germinated, then a drying process or a roast-dry process is performed, without adding amino acids as additives, the method of processing of food, in which functional ingredients (like GABA or free amino acids) contents are increased by controlling manufacturing conditions in at least one step during a manufacturing process of the food or food products, can be provided.

In order to achieve the above-mentioned object, as described in claim 15, there is provided a method of processing a food or food products,
characterized in that said food or food product is one of bread, pasta, udon and soba.

According to claim 15, without adding amino acids as additives, a method of processing one of bread, pasta, udon and soba, in which functional ingredients (like GABA or free amino acids) contents are increased, can be provided.

In order to achieve the above-mentioned object, as described in claim 16, there is provided a fried food or food products using one or more of wheat, barley, oats and rye or flour of processed products of the one or more of wheat, barley, oats and rye,
characterized in that said flour of processed products of the one or more of wheat, barley, oats and rye is a seed of the one or more of wheat, barley, oats and rye soaked in water or hot water, a germinated seed of the one or more of wheat, barley, oats and rye depending on germination time, or malt, in which malt seed of the one or more of wheat, barley, oats and rye are soaked in water or hot water to be germinated, then a drying process or a roast-dry process is performed.

According to claim 16, by adding any one of the seeds of the one or more of wheat, barley, oats and rye soaked in water or hot water, a germinated seed of the one or more of wheat, barley, oats and rye depending on germination time, or malt, in which malt a seed of the one or more of wheat, barley, oats and rye is soaked in water or hot water to be germinated, then a drying process or a roast-dry process is performed to 50% fried, fried food, in which is included lots of GABA and other free amino acids, so that a feeling of appetite that the fried food is soft due to the protease activity in the processed product of one or more of wheat, barley, oats and rye, can be provided. Also, in a manufacturing process of edible covering of fried foods, functional ingredients contents in the edible covering can be adjusted by controlling manufacturing conditions.

As mentioned above, it is possible to provide food or food products and their processing methods, in which any functional ingredient content is increased by controlling the temperature condition during at least one step of their manufacturing processes with using processed products of one or more of wheat, barley, oats and rye (like malt) as food raw materials. Also, it is possible to provide food or food products and their processing methods, in which functional ingredients contents are increased by controlling manufacturing conditions of foods added with non-processed wheat, barley, oats and rye but without processed products of one or more of wheat, barley, oats and rye, or foods with usual raw material of grains.

Other objects, features and advantages of the present invention will become more apparent from the following detailed description.

### BRIEF DESCRIPTION OF THE DRAWINGS

Fig. 1 is a picture showing breads having different mixed ratios of malt;
Fig. 2 is a graph showing a change of free amino acids contents during the manufacturing process of breads with only bread flour;
Fig. 3 is a graph showing a change of free amino acids contents during the manufacturing process of breads with 0.36% of mixed ratio of malt flour;
Fig. 4 is a graph showing a change of free amino acids contents during the manufacturing process of breads with 10% of mixed ratio of malt flour;
Fig. 5 is a graph showing a change of free amino acids contents during the manufacturing process of breads with 20% of mixed ratio of malt flour;
Fig. 6 is a picture showing breads manufactured with malt only processed in the soaking process;
Fig. 7 is a graph showing the GABA content during the manufacturing process of breads manufactured with malt only processed in the soaking process;
Fig. 8 is a graph showing the GABA content during the kneading process for manufacturing breads;
Fig. 9 is a graph showing the Ala content during the kneading process for manufacturing breads;
Fig. 10 is a graph showing free amino acids contents in bread dough during the fermentation process for manufacturing breads;
Fig. 11 is a graph showing an increased ratio of free amino acids contents in bread dough with mixed ratio of 100% bread flour before fermentation and after fermentation;
Fig. 12 is a graph showing free amino acids contents in bread dough with a mixed ratio of 80% bread flour and 20% barley flour before fermentation and after fermentation;
Fig. 13 is a graph showing free amino acids contents in bread dough with a mixed ratio of 80% bread flour and 20% germinated barley flour before fermentation and after fermentation;
Fig. 14 is a graph showing free amino acids contents in bread dough with different temperatures using bread which has the mixed ratio of figures 11-13 before fermentation and after fermentation;
Fig. 15 is a graph showing the GABA content during manufacturing process of pasta;
Fig. 16 is a picture showing outer appearances of udon which has a mixed ratio of 0% malt and 20% malt;
Fig. 17 is a picture showing the outer appearance of soba-like noodles;
Fig. 18 is a graph showing free amino acids contents in udon dough with a mixed ratio of 70% bread flour and 30% pastry flour before aging and after aging;
Fig. 19 is a graph showing free amino acids contents in udon dough with a mixed ratio of 70% bread flour and 30% barley flour before aging and after aging;
Fig. 20 is a graph showing free amino acids contents in udon dough with a mixed ratio of 70% bread flour and 30% germinated barley flour before aging and after aging;
Fig. 21 is a graph showing free amino acids contents in udon dough with different temperatures using udon which has the mixed ratio of figures 18-20 before aging and after aging;
Fig. 22 is a graph showing free amino acids contents in soba dough with a mixed ratio of 70% soba flour and 30% bread flour before aging and after aging;
Fig. 23 is a graph showing free amino acids contents in soba dough with a mixed ratio of 70% soba flour and 30% barley flour before aging and after aging;
Fig. 24 is a graph showing free amino acids contents in soba dough with a mixed ratio of 70% soba flour and 30% germinated barley flour before aging and after aging;
Fig. 25 is a graph showing free amino acids contents in soba dough with 100% soba flour before aging and after aging;
Fig. 26 is a graph showing the GABA content in soba dough with different temperatures using soba which has the mixed ratio of figures 22-25 before aging and after aging; and
Fig. 27 is a graph of the protease activity in various malt samples.

### DESCRIPTION OF THE PREFERRED EMBODIMENTS

A description will now be given, with reference to the embodiments according to the present invention. Inventors of the present invention present a possibility to provide food or food products and their processing methods, in which functional ingredients contents in foods are increased by using processed products of one or more of wheat, barley, oats and rye as various food materials.

The present invention has two steps. One step is to manufacture various food products including processed products of one or more of wheat, barley, oats and rye, and the other step is to mix processed products of one or more of wheat, barley, oats and rye or non-processed wheat, barley, oats and rye with other food materials, thereby functional ingredients contents in various food products are increased during their manufacturing processes. In the below description, each step is described in detail.

Breads, pasta, udon, soba, and cakes, etc., were manufactured by mixing processed products of one or more of wheat, barley, oats and rye with other food materials. In the case of breads, the mixed ratio of processed product was increased to 20% which is a higher ratio than the conventional mixed ratio (0.09-0.36%) (see non-patent document 1). Also, other food products were manufactured depending on their respective manufacturing processes with mixed ratios of 20-50% of processed products of one or more of wheat, barley, oats and rye. It is clear that a food material which keeps the characteristics of its food can be manufactured for any food sample.

Next, functional ingredients contents were increased by mixing processed products of one or more of wheat, barley, oats and rye into other food materials during the food manufacturing process. As one example of processed products of one or more of wheat, barley, oats and rye, barley malt (Haruna Nijo) was used. In the manufacturing method for the malt, the barley malt was soaked in water or hot water, and the germination (6 days) step was processed (temperature was 15 °C for both processes), then the obtained sample was dried and the dried sample was used as a material for food manufacturing.

Also, prior to increasing functional ingredients contents during manufacturing of food materials by mixing barley malt with other food materials, functional ingredients (free amino acids) contents in seeds and malt during the manufacturing process of malt were measured with the progression of time. For the barley processed products without malt, one type of sample was produced by soaking barley seeds into water or hot water (hereinafter, it is called the soaking process), the other type of sample was produced by germinating the soaked sample (germination period is 1-6 days), and each sample was freeze-dried. Then, samples were made into flour. The powdered sample of 50 mg/800 µl water was shaken overnight at 5 °C, then the functional ingredients contents were measured with an amino acids analyzer (Nihon-Denshi).

As a result of the measurement, for most free amino acids like proline, their contents were drastically increased after germination day 1. On the other hand, the highest GABA content was for the soaked sample. Thus, depending on degree of processing for barley seeds, barley processed products, which have increased free amino acid in target, are obtained, and they are used as food material. Especially, processed products of barley seeds only with the soaking process may be used as materials for the purpose of increasing GABA.

Also, a change of protease activity in each one of the above processed products of barley was measured with the progression of time. According to a result of the measurement, the protease activity was drastically increased for the processed product with 1 day germination, and the highest activity was observed for the processed product with 3 day germination. Also, the same tendency was recognized for decomposition enzymes of dietary fibers. According to these results, it shows that the GABA content is high, but protease activity and decomposition activity of dietary fibers is low for processed products only with the soaking process. Therefore, it is possible to manufacture food products, in which decomposition (allow to become low molecules) of protein and dietary fibers during the food processing be restricted, and free amino acids contents are increased, by using processed products with the soaking process as materials or food materials.

In the present invention, the germinated barley with 6 days of germination and the soaked barley were mixed with other materials for food, and free amino acids were increased during the food processing, then food products including high GABA and other free amino acids contents in their food materials were manufactured. According to a measurement about a change concerning free amino acids contents during each food processing, it is clear that as the mixed ratio was increased, the GABA and some free amino acids contents were increased during the fermentation process. Also, it is recognized that some free amino acids contents were decreased during the fermentation process with the conventional mixed ratio (0.09-0.36%), but these contents were increased during the fermentation process by increasing the mixed ratio of barley processed product.

According to an embodiment of the present invention, it is possible that free amino acids contents, preferably GABA content, is increased in food by using the barley processed product as various food materials. Also, in the present invention, breads, udon and soba were manufactured for three cases by controlling temperature during the fermentation or the aging processes. One case is for usual food materials. The second case is for mixing the germinated barley as the barley processed product with usual food materials. The third case is for mixing the non-processed barley with usual food materials. In the present specification, the non-processed wheat, barley, oats and rye means wheat, barley, oats and rye, which have no processed step for the processed products of one or more of wheat, barley, oats and rye. In the below examples, usual barley flour which is flour of barley was used. According to a measurement of a change in free amino acids contents during each food manufacturing process, it is recognized that free amino acids contents, preferably the GABA content, in these food products can be increased by not only adding the barley processed product, but also mixing barley flour as the non-processed barley. Also, the same is recognized for using usual materials.

In the below discussion, embodiments of the present invention are explained with examples.

### First Embodiment

A change of free amino acids contents during bread manufacturing process with barley malt as material for breads

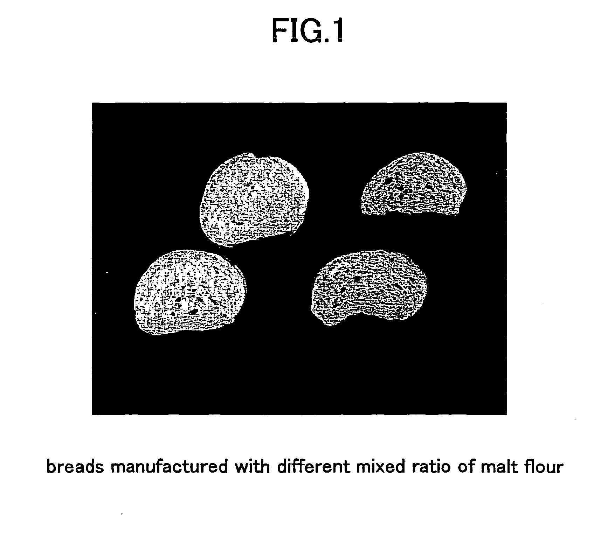

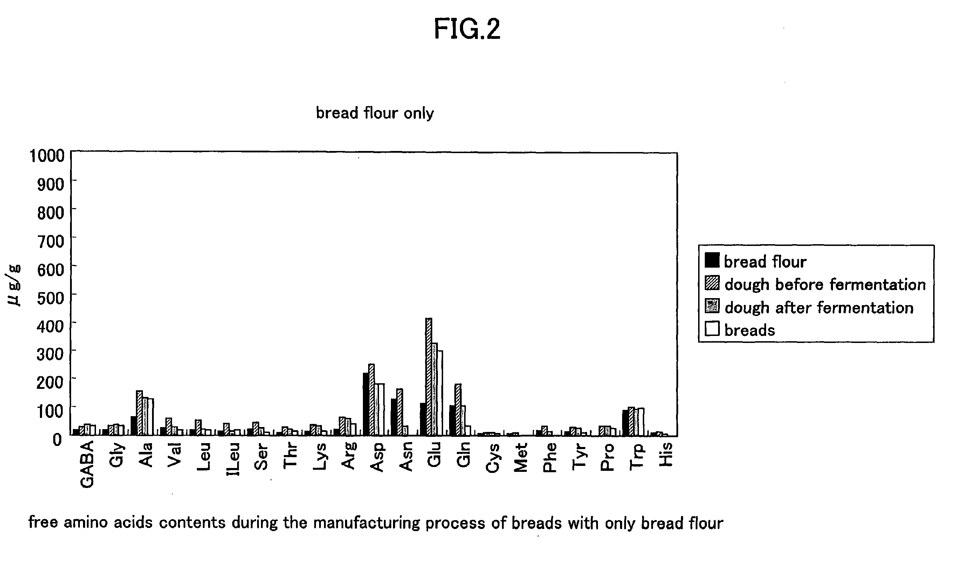

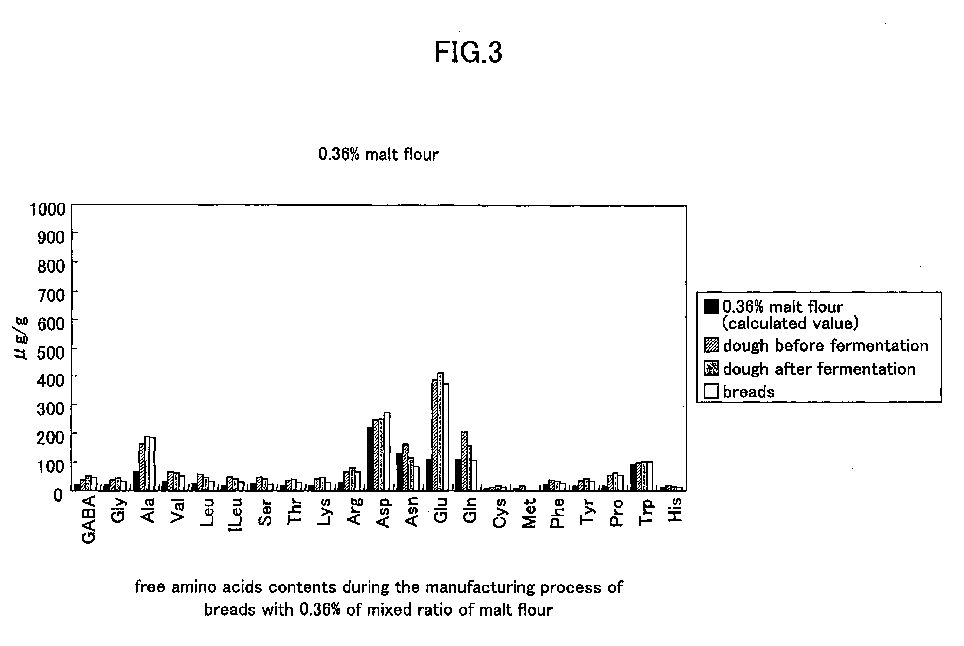

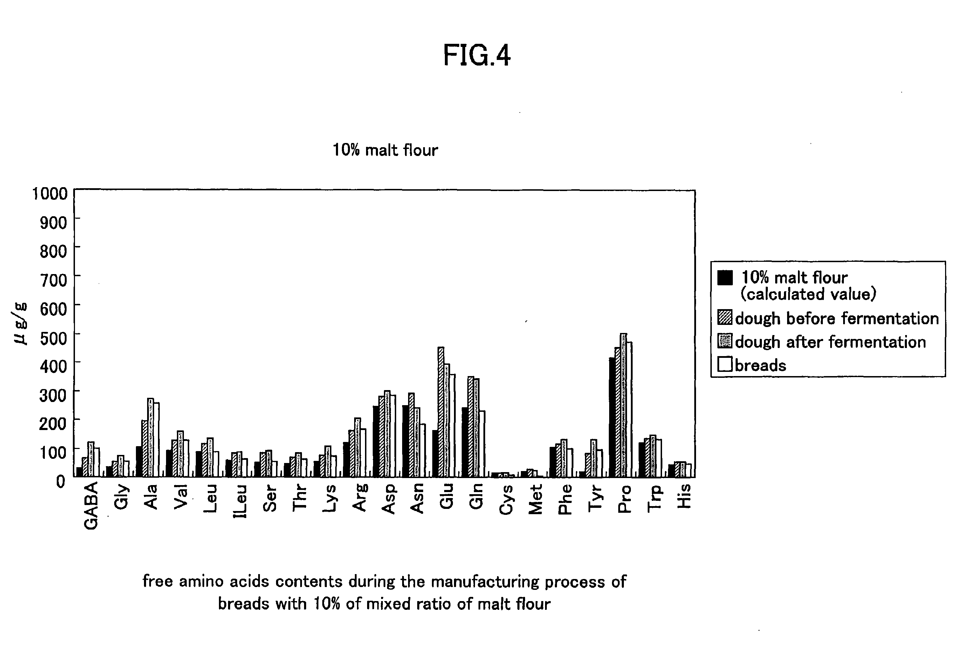

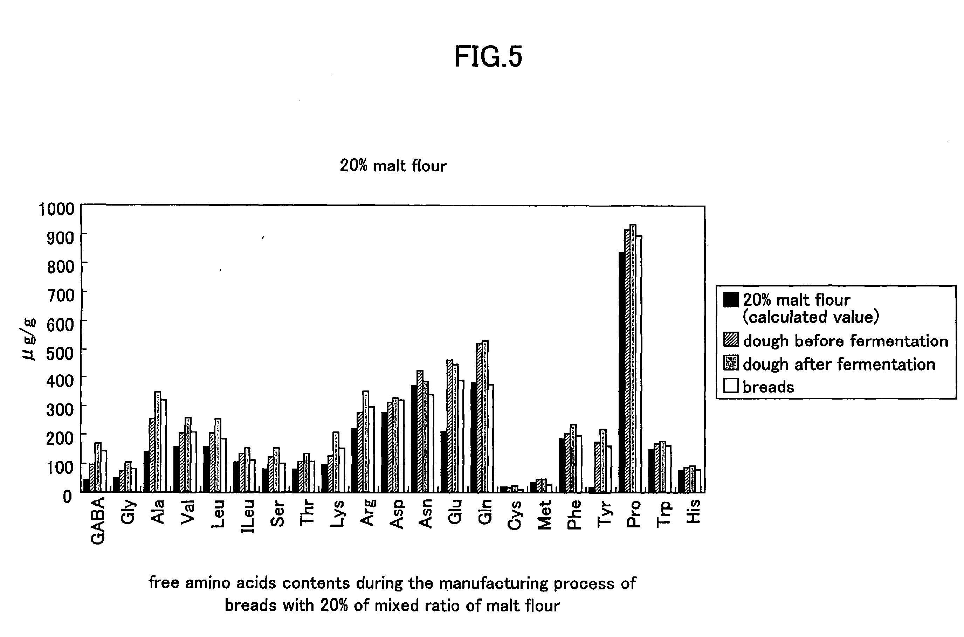

Roll Breads were manufactured with the conventional manufacturing process of breads by mixing 0%, 0.36%, 10% and 20% of the above barley malt in flour form (hereinafter, it is called malt flour) with bread flour. The mixed ratio of 0.36% is a typical mixed ratio of malt flour during manufacturing process for breads as described above (see non-patent document 1). Breads were manufactured based on these materials (figure 1), the change of GABA and other free amino acids contents during breads manufacturing process were measured (see figures 2-5).

Figure 1 shows breads having different mixed ratios of malt flour. The lower left is a piece of bread with 0% mixed ratio. The upper left is a piece of bread with 0.36% mixed ratio. The lower right is a piece of bread with 10% mixed ratio. The upper right is a piece of bread with 20% mixed ratio.

Concerning calculated values in figures 2-5, for GABA, the GABA content in the bread flour was 1.8 mg/100 g, the GABA content in the malt flour was 13.9 mg/100 g, so graphs in figures 2-5 were indicated that calculated values = (% of the bread flour x 1.8/100) + (% of the malt flour x 13.9/100). Based on a result of analysis, as the mixed ratio of malt flour was increased, free amino acids contents were also increased. However, it is recognized that functional ingredients contents were increased for some free amino acids like GABA during the fermentation process; as the mixed ratio of malt flour is further increased, its increasing ratio is also further increased. For valine and leucine, their contents were decreased during the fermentation process until the mixed ratio of malt flour was decreased to 0.36%. However, it is recognized that a decline of valine or leucine content during the fermentation process is not only restricted but also increased by increasing the mixed ratio of malt flour.

### Second Embodiment

A change of free amino acids contents during breads manufacturing process with barley processed product only with the soaked process as material for breads

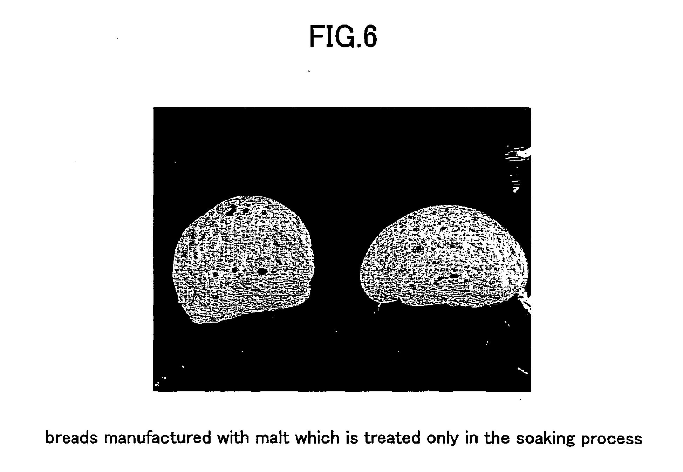

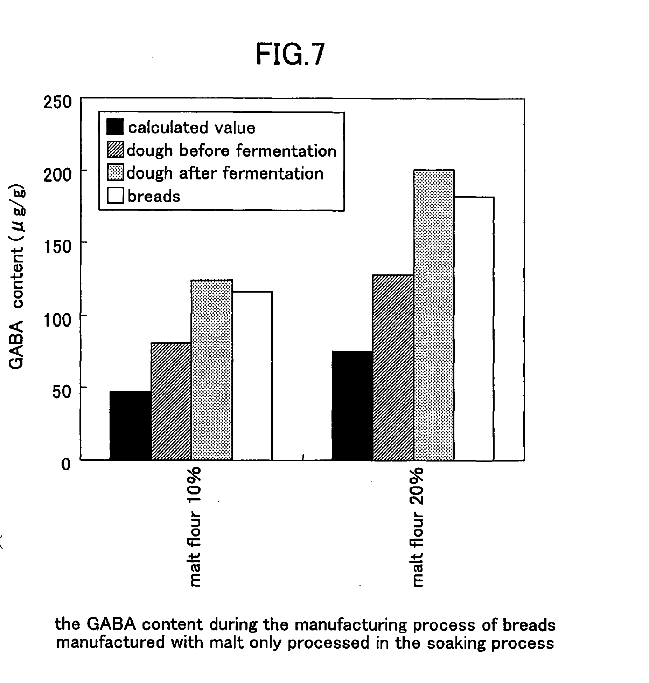

Barley flour was manufactured using a barley processed product only with the soaking process. Based on a measurement of free amino acids contents in the barley flour, it is recognized that the GABA content is more included in the barley flour than in other barley processed products (the germinated barley, barley malt). Thus, after mixing 10% and 20% of malt flour with bread flour, roll breads were manufactured with the conventional manufacturing method of breads (figure 6), and a change of the GABA content during the breads manufacturing process was measured (figure 7).

Figure 6 shows breads manufactured with barley processed products only processed in the soaking process. In figure 6, on the left is a piece of bread with 10% mixed ratio and on the right is a piece of bread with 20% mixed ratio. Figure 7 shows the GABA content during the manufacturing process of breads manufactured with barley processed product only processed in the soaking process.

For the GABA content in material, the GABA content in the bread flour was 1.9 mg/100 g, the GABA content in the malt flour was 30.4 mg/100 g, so graphs were indicated that calculated values = (% of the bread flour x 1.9/100) + (% of the malt flour x 13.9/100). Based on a result of measurement of the GABA content during the manufacturing process, the GABA content was increased for any mixed ratio during the manufacturing process of breads; the same as in the first embodiment, as the mixed ratio was further increased, its content was also further increased. Also, compared with the first embodiment and second embodiment for breads with 20% of the mixed ratio, it is recognized that the GABA content is slightly increased for the barley processed product as material.

Also, bread was manufactured using a barley processed product with 50% mixed ratio, but decomposition of gluten during the manufacturing process of bread was not recognized, and the manufactured bread kept characteristics of bread. Also, pizza was manufactured using pizza dough including a barley processed product with 20% mixed ratio, and pizza which has a feeling of chewiness and has good moisture in pizza dough could be manufactured.

### Third Embodiment

A change of free amino acids contents in breads during the manufacturing process of breads by the kneading temperature, the fermentation temperature and the fermentation time

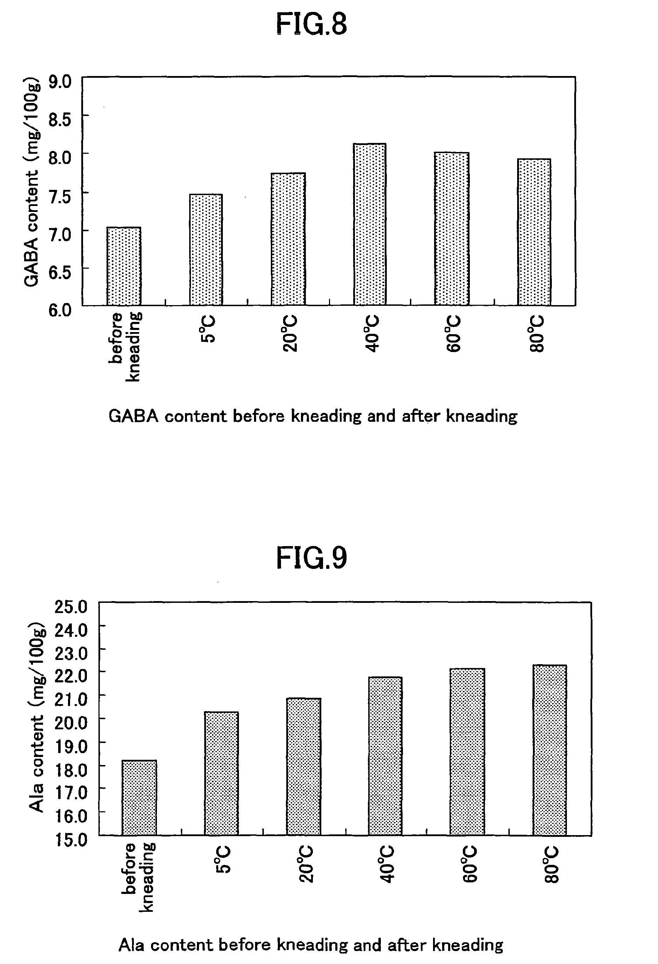

Bread dough was manufactured with 5 °C, 20 °C, 40 °C, 60 °C and 80 °C water which is added to materials in order to adjust the dough temperature during the kneading process. As materials, 20% of the barley processed product only with the soaking process was mixed with the bread flour. As a result of measurement of free amino acids contents before kneading and after kneading, the highest contents of GABA (see figure 8) and valine in bread dough were at 40 °C. Also, for alanine (figure 9) and cysteine, the highest contents were at 80 °C.

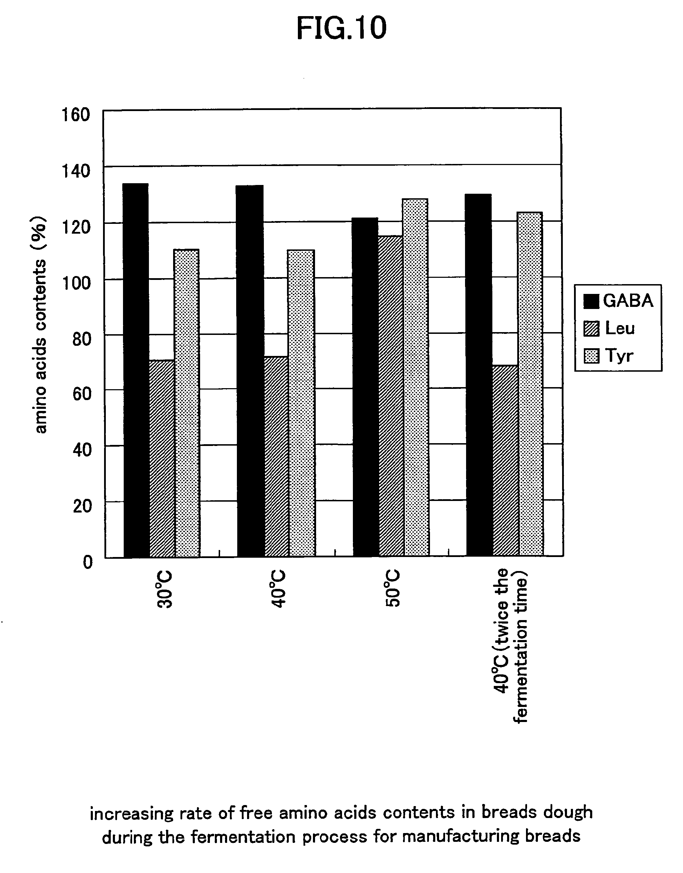

Also, bread dough was fermented with 30 °C, 40 °C and 50 °C of the fermentation temperature, and a change of free amino acids contents before fermentation and after fermentation was measured. Also, an influence of fermentation time at the 40 °C fermentation was examined and investigated. As a result, it was recognized that influences of fermentation temperature and fermentation time for each amino acid is different. Free amino acids contents before the fermentation process were set at 100, and free amino acids contents in bread dough after the fermentation process were measured. In this case, GABA, leucine and tyrosine were sampled as shown in figure 10 (in figure 10, they are shown as GABA, Leu and Tyr), the GABA content at 50 °C of the fermentation became the lowest, the leucine and tyrosine contents at 50 °C became the highest. Also, for influence of the fermentation time, if the fermentation time is longer (in figure 10, the fermentation time was double at 40 °C), GABA and leucine contents were decreased, but tyrosine content was increased. According to the above result, it is thought that there is a probability of being able to restrict the increase or the decrease of targeted functional ingredients in breads by controlling temperature and time during the kneading or the fermentation process. Also for food other than breads, the same effects are expected by controlling temperature or time during any part of the manufacturing process, like an aging process.

### Forth Embodiment

Influence that fermentation temperature affects free amino acids contents in breads by adding barley flour (non-processed barley) in usual materials

Free amino acids contents were measured by controlling temperature during the fermentation process in the case for adding not only a processed product of barley but also a non-processed product of barley to usual materials. Barley flour of Haruna Nijo was used as the non-processed barley.

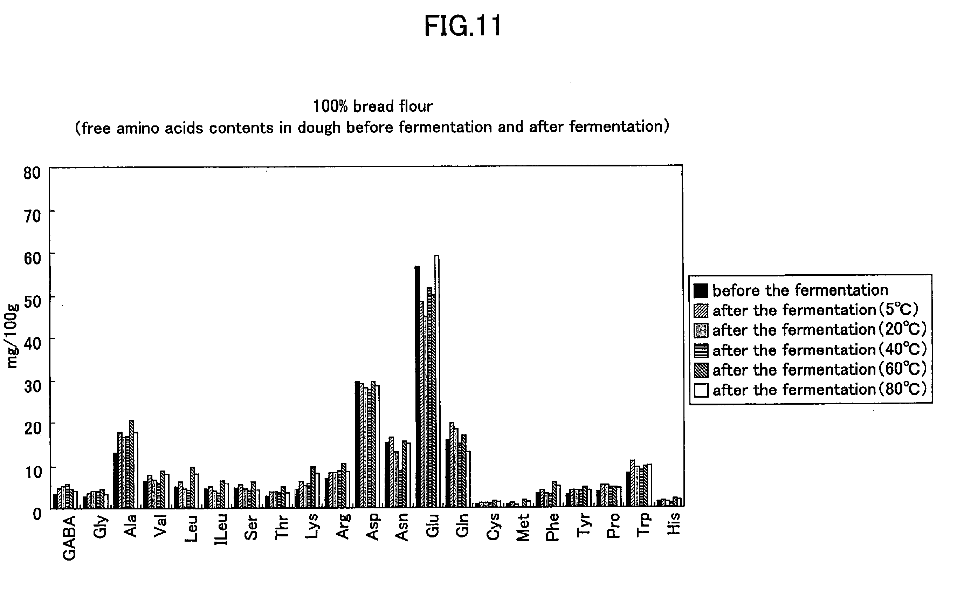

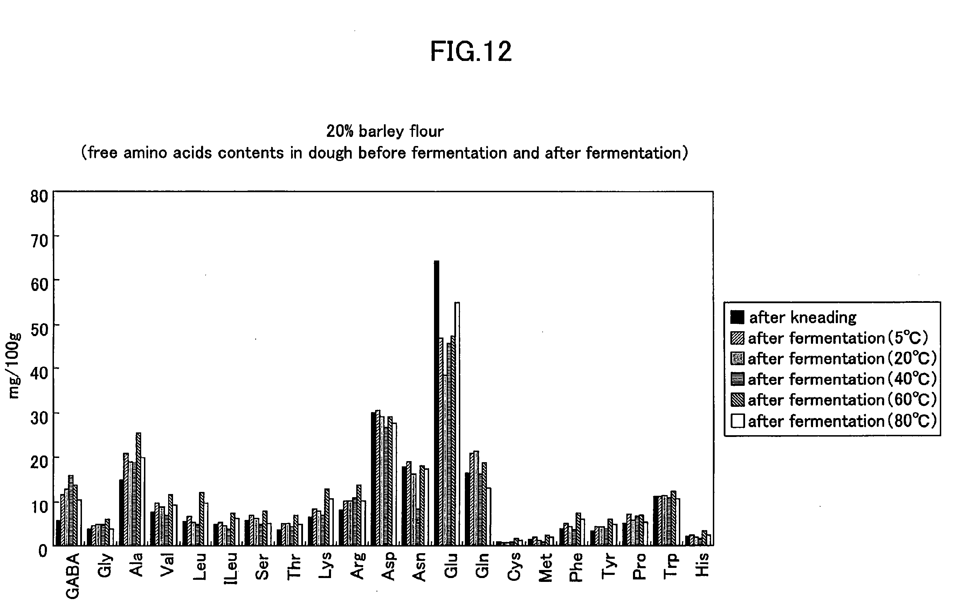

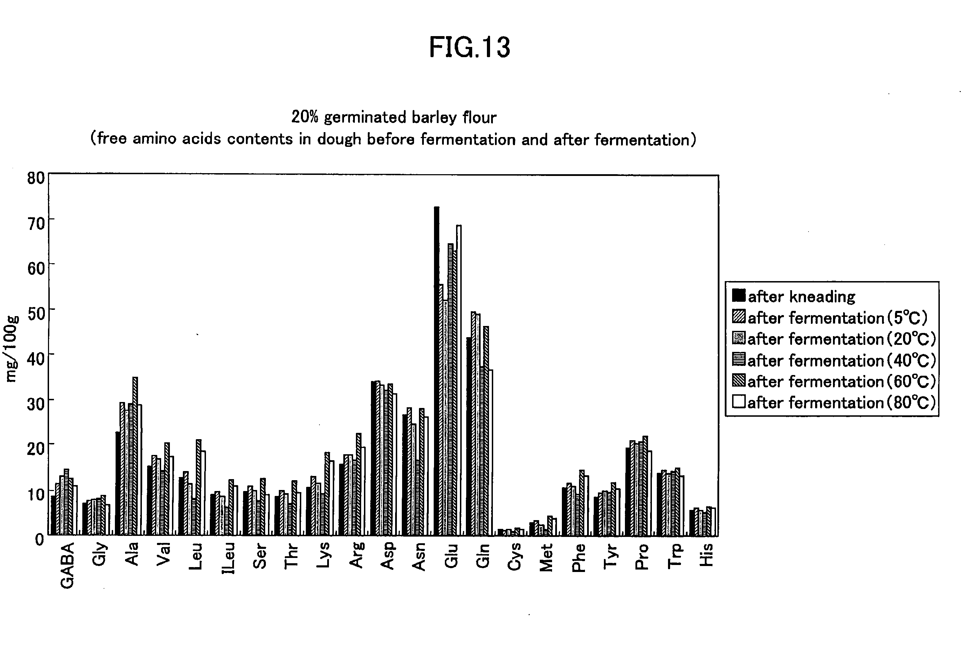

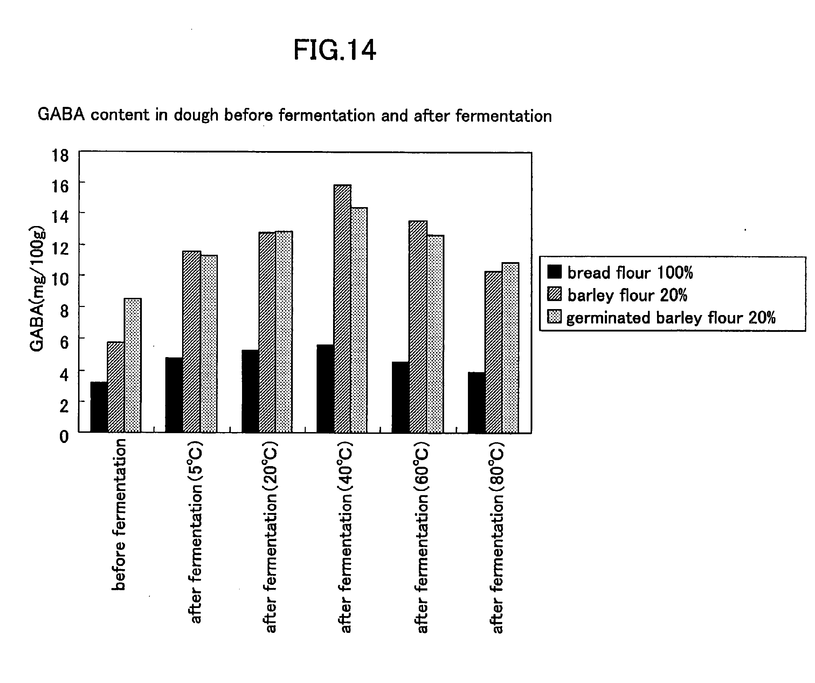

In detail, for manufacturing processes of three types of samples, breads with usual materials (100% bread flour), breads with 80% bread flour and 20% barley flour of Haruna Nijo, and for breads with 80% bread flour and 20% flour of the germinated barley, a change of free amino acids contents before fermentation and after fermentation was measured by altering the fermentation temperature to be 5 °C, 20 °C, 40 °C 60 °C and 80 °C. These results of 3 samples are shown in figure 11, 12 and 13, respectively. Temperatures at the highest contents are different for each amino acid. Referring to figures 11, 12 and 13, the highest GABA content was at 40 °C of the fermentation process for every sample. Concerning other free amino acids, it is the same tendency for a change of contents against change of the fermentation temperature of each sample. For example, the highest free amino acid content was at 60 °C of the fermentation, the highest Glu content was at 80 °C of the fermentation and the highest content was before the fermentation. In all cases, it was recognized that free amino acids contents are changed depending on temperature of the fermentation process. Figure 14 shows the GABA contents in bread dough with different temperatures using breads which have the mixed ratio of figures 11-13 before fermentation and after fermentation.

Referring to figure 14, most of free amino acids contents showed their highest values when the germinated barley flour was mixed, but the GABA content showed its highest value when the barley flour was mixed. Especially, a change of GABA content showed its highest value when the germinated barley flour was mixed before fermentation, then, the second highest value was shown when the barley flour was mixed, and last, the third highest value was shown when 100% of the bread flour was mixed. However, the GABA content was increased more when the barley flour was mixed compared to other cases after fermentation.

Thus, it was recognized that the GABA in breads is increased by controlling the fermentation temperature between 5 and 80 °Cs during the manufacturing process of breads in the case of mixing the barley flour with the usual materials as well as the case of mixing the germinated barley with the usual materials. Also, even though the ratio increase is small, the GABA content showed its highest value at 40 °C in the case that only the bread flour was used.

### Fifth Embodiment

The change of free amino acids contents during the manufacturing process for pasta

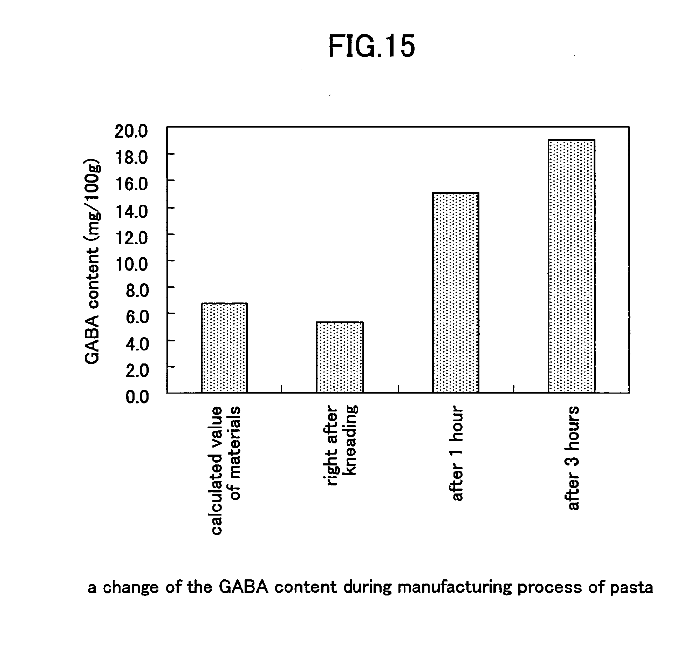

As same as the first embodiment, after mixing the malt flour which is made into flour from barley malt, pasta was manufactured using a conventional method, and a change of the GABA content in the aging process (hereinafter, it is called an aging process) of dough was measured. The temperature in the aging process is an ambient temperature, but in this embodiment, the temperature was 45 °C, the bread flour was mixed to 40%, the pastry flour was mixed to 40% and the malt flour was mixed to 20% in ratio of materials. Concerning the GABA content in materials used for manufacturing, the GABA content in the bread flour was 1.9 mg/100 g, the GABA content in the pastry flour was 2.4 mg/100 g, the GABA content in the malt flour was 25.6 mg/100 g, so graphs were indicated that calculated values for materials = (40% of the bread flour x 1.9/100) + (40% of the pastry flour x 2.4/100) + (20% of the malt flour x 25.6/100). As a result, it was recognized that the GABA content in pasta dough was increased by mixing malt flour and through the aging process (see figure 15). Figure 15 shows a change with time of the GABA content during manufacturing process of pasta. Also, other free amino acids (except glutamic acid) contents were increased due to the aging process as well as the GABA content. Also, pasta was manufactured using the barley processed product in the second embodiment with 30% in this manufacturing process. As a result, it was recognized that the manufactured pasta has the characteristics of pasta. Also, the same as breads, it is expected that the GABA content is increased compared to the pasta using the barley malt.

### Sixth Embodiment

Manufacturing of udon and soba mixed with soaked barley in their materials

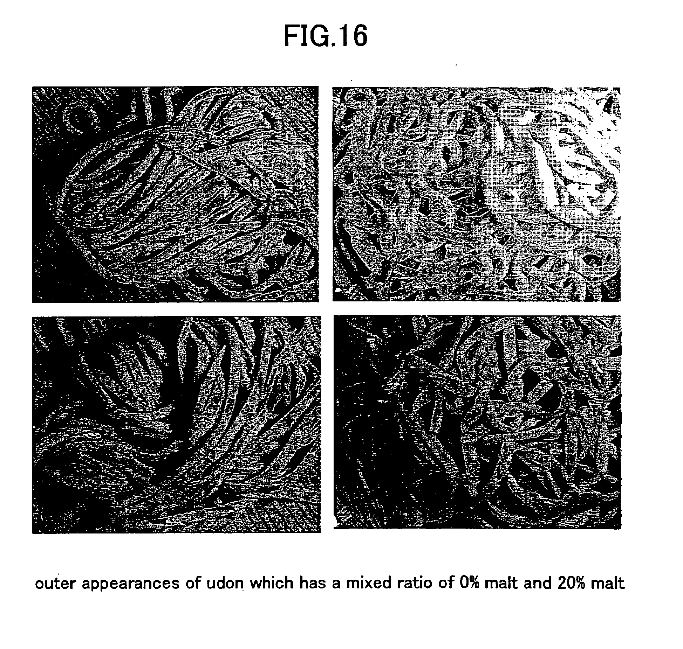

The same as the second embodiment, udon was produced with a conventional method using the barley flour which is made into flour from the soaked barley. Comparison examples were performed using 0% and 20% of barley flour mixing ratio to all purpose flour. In the case of 20% barley flour mixing ratio, there were no different characteristics between them other than outer appearance of color, and there were the same characteristics as udon after boiling (see figure 16). Also, in the case of 50% barley flour mixing ratio, there were the same characteristics as udon as well as the case of 20% of barley flour mixing ratio.

Figure 16 shows outer appearances of udon which have mixed ratios of barley flour 0% and 20%. In figure 16, the upper left shows udon with 0% barley flour (after cutting noodles), the lower left shows udon with 20% barley flour (after cutting noodles), the upper right shows udon with 0% barley flour (after boiling noodles), and the lower right shows udon with 20% barley flour (after boiling noodles). Thus, udon which includes lots of GABA and other free amino acids can be manufactured.

Comparison examples were performed for soba. Soba was produced using 60% soba flour and 40% all purpose flour, and 60% soba flour and 20% all purpose flour and 20% barley flour. There were no different characteristics between them, and the characteristics of soba with 20% barley flour were the same as the characteristics of soba. Also, soba was manufactured with 50% barley flour, 30% all purpose flour and 20% soba flour. The characteristics of the above soba were the same as the characteristics of soba with 20% barley flour.

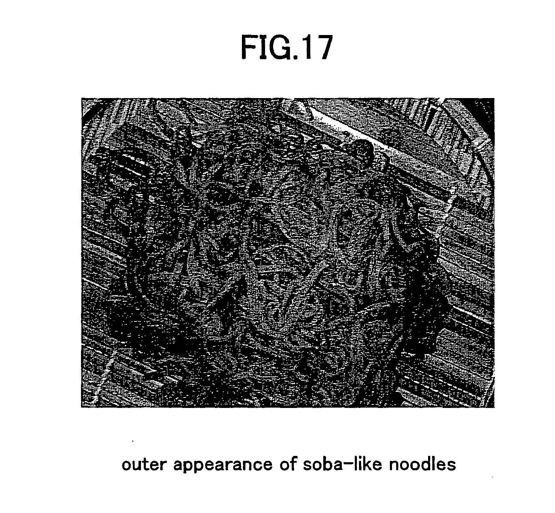

Also, a soba-like noodle as new noodles which has 50% all purpose flour and 50% barley flour was produced with the conventional soba method. As a result, soba-like noodles which have no soba flour and the same appearance and color as soba could be produced (see figure 17). Figure 17 shows the outer appearance of the soba-like noodles. There is no need to worry about soba-allergy because the soba-like noodles do not use soba flour. Also; the soba-like noodles include lots of GABA and other free amino acids.

### Seventh embodiment

Influence that the aging temperature has on free amino acids contents in udon by adding barley flour (non-processed barley) in usual materials

Free amino acids contents were measured by controlling temperature during the aging process in the case for adding not only processed product of barley but also non-processed product of barley to usual materials. Barley flour was used as non-processed barley.

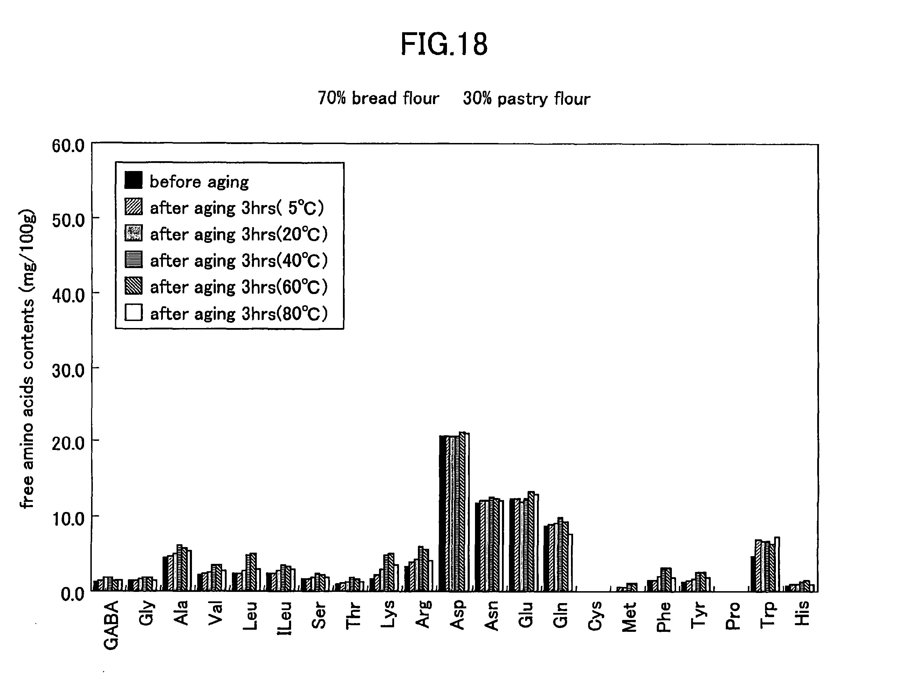

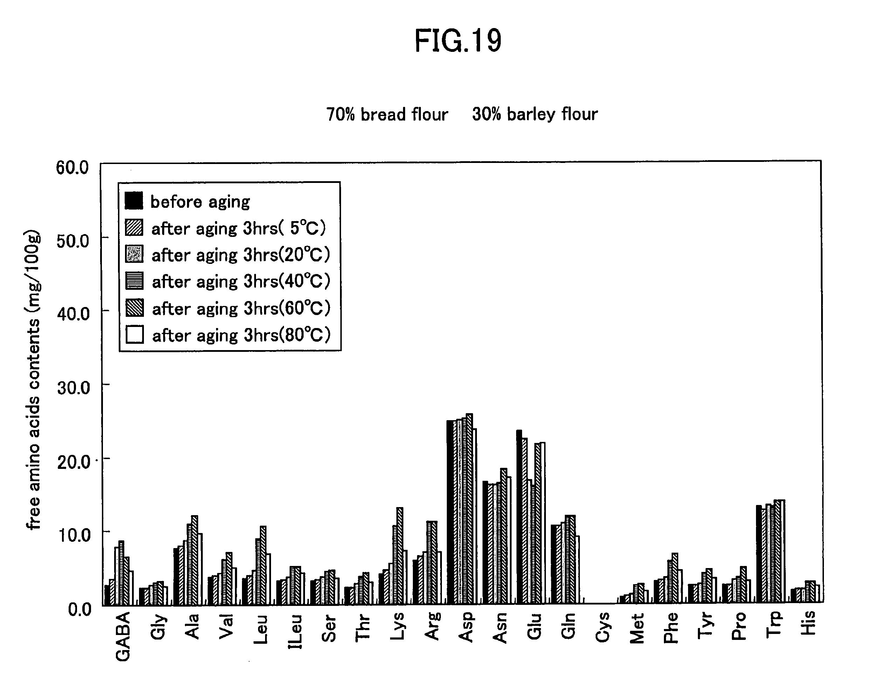

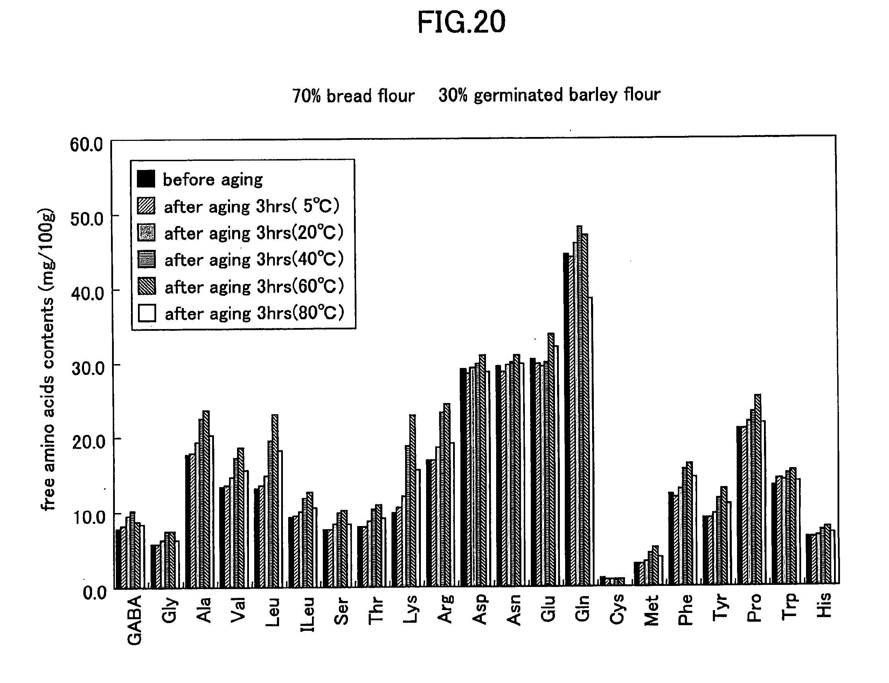

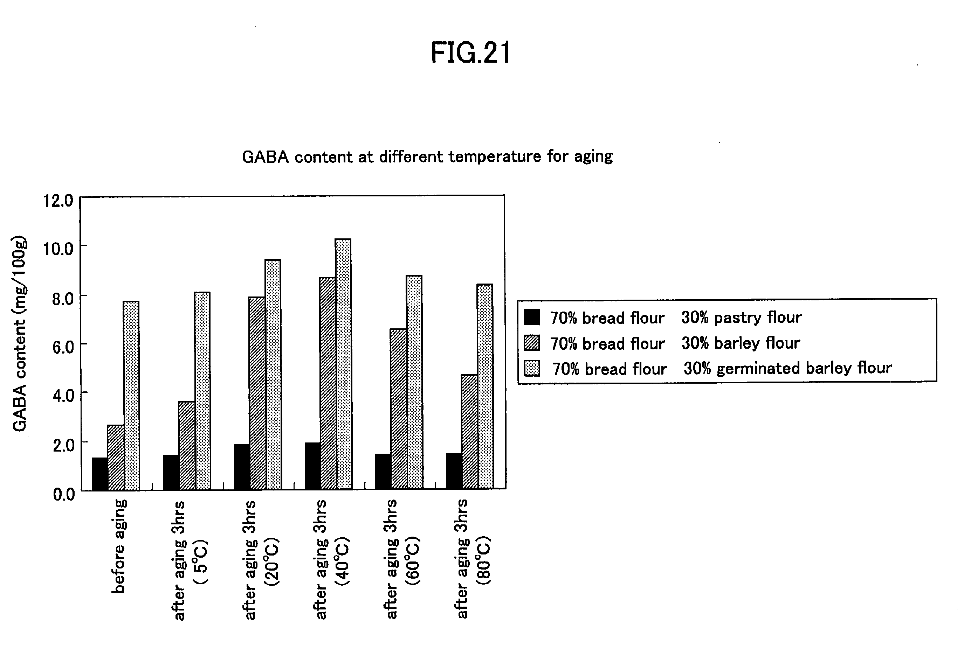

In detail, for manufacturing processes of three types of samples, udon with usual materials (70% bread flour and 30% pastry flour), udon with 70% bread flour and 30% barley flour and udon with 70% bread flour and 30% germinated barley, a change of free amino acids contents before aging and after aging was measured by altering the aging temperatures of 5 °C, 20 °C, 40 °C 60 °C and 80 °C with 3 hours aging time each. These results of 3 samples are shown in figure 18, 19 and 20, respectively. As a result, as shown in figure 18 about usual materials, each free amino acid content was altered with little dependence on the change of the temperature of the aging process, and most free amino acids contents showed their highest values in a temperature zone 40-60 °C. For GABA, figure 21 shows the GABA content in udon dough with different temperatures using udon which has the mixed ratio of figures 18-20 before aging and after aging. According to figure 21, a change of content can be analyzed clearly. For udon with 70% bread flour and 30% barley flour, the change of content is different for each free amino acid, but the GABA content showed its highest value at 40 °C aging temperature (see figure 19). Referring figure 20, for udon with 70% bread flour and 30% germinated barley flour, the GABA and Glu contents showed their highest value at 40 °C aging temperature. Also, other free amino acids contents showed their highest value at 60 °C aging temperature. For Glu, its reaction against temperature between samples is different. The Glu content showed its highest value at 5 °C for 30% barley flour of the mixed ratio. Also, concerning GABA, referring to figures 19 and 20, the GABA content showed its highest value at 40 °C aging temperature for mixing with the barley flour and the germinated barley flour.

Referring figure 21, comparing the GABA contents with each other, the GABA content for mixing with 30% barley flour was higher than for usual materials regardless of the aging temperature. Also, the GABA content for mixing with 30% germinated barley flour was higher than for mixing with 30% barley flour regardless of the aging temperature. It was recognized that the GABA content for mixing with the germinated barley flour was higher than for mixing with the barley flour before the aging process, but there was little difference between for mixing with the barley flour and the germinated barley flour around 40 °C aging temperature.

Therefore, it was recognized that the GABA in udon is increased by maintaining the aging temperature between 5 and 80 °Cs during the manufacturing process of udon in the case of mixing the barley flour with the usual materials as well as the case of mixing the germinated barley with the usual materials.

### Eighth embodiment

Influence that the aging temperature has on free amino acids contents in soba by adding barley flour (non-processed barley) in usual materials

Free amino acids contents were measured by controlling temperature during the aging process in the case for adding not only processed product of barley but also non-processed product of barley to usual materials. Barley flour was used as non-processed barley.

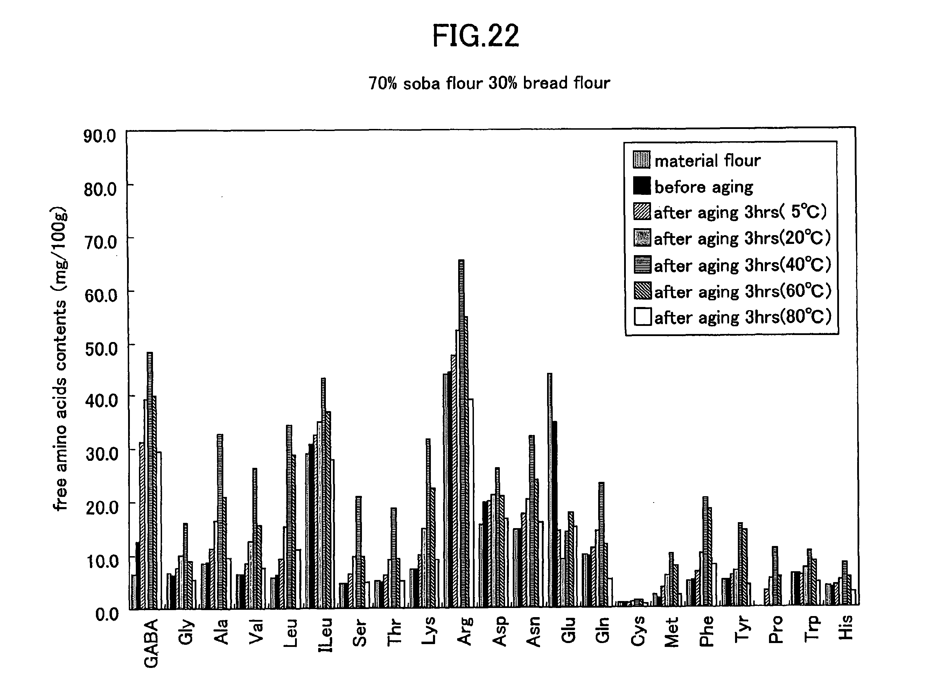

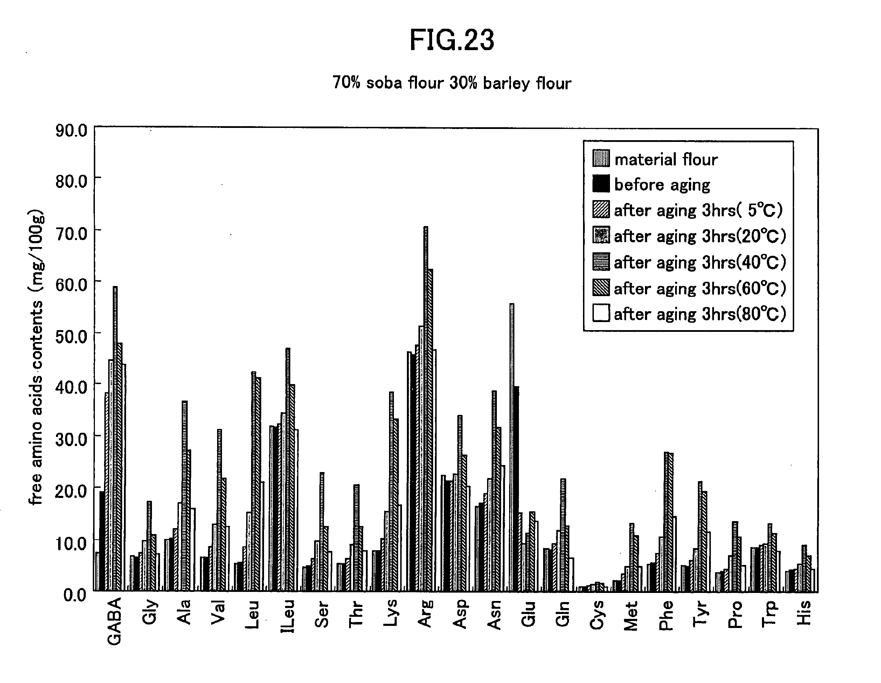

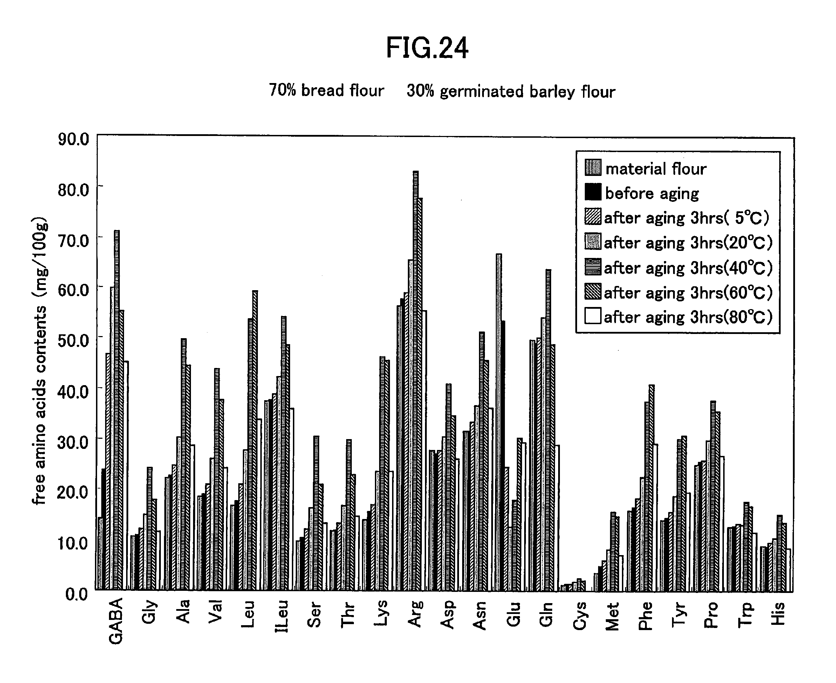

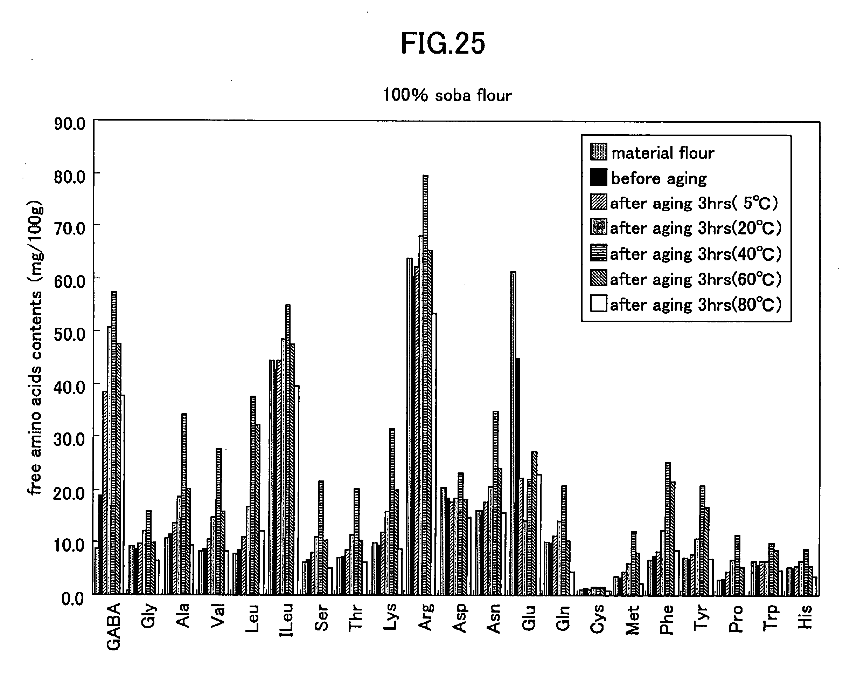

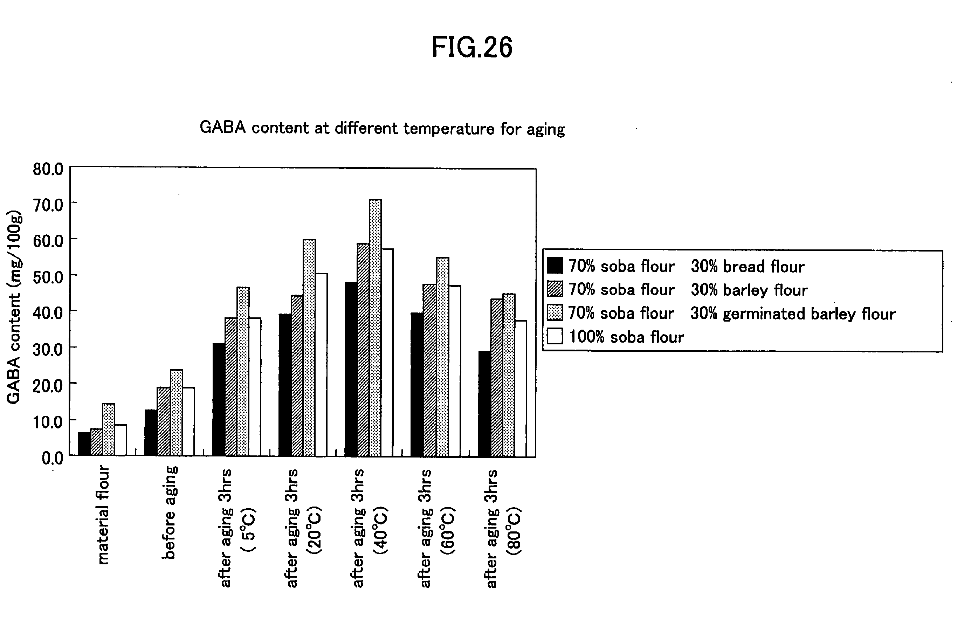

In detail, for manufacturing processes of four types of samples, soba with usual materials (70% soba flour and 30% bread flour), soba with 70% soba flour and 30% barley flour, soba with 70% soba flour and 30% germinated barley flour and soba with 100% soba flour, a change of free amino acids contents before aging and after aging was measured by altering the aging temperatures of 5 °C, 20 °C, 40 °C, 60 °C and 80 °C. These results of 4 samples are shown in figure 22, 23, 24 and 25, respectively. Compared with udon, it was recognized that free amino acids contents in soba were already increased before the aging process. It is thought that there is no change before the aging process because the kneading process of udon was performed at 5 °C and free amino acids contents in soba were already increased before the aging process because the kneading process of soba was performed at ambient temperature. Also, compared with udon, it was recognized that free amino acids contents during the aging process were drastically increased. Referring figures 22, 23, 24 and 25, free amino acids including GABA contents showed their highest values at 40 °C aging temperature for all samples. Especially for Glu, the Glu content showed its highest value at 5 °C aging temperature for all samples. Figure 26 shows GABA content in soba dough with different temperatures using soba which has the mixed ratio of figures 22-25 before aging and after aging.

Referring figure 26, comparing the GABA contents with each other, the GABA content for mixing with 30% germinated barley flour showed the highest value regardless of the aging temperature. Also, the GABA content for mixing with 100% soba flour was greatly increased during the aging process. In addition, there was little difference between mixing with the barley flour and the germinated barley flour around 40 °C aging temperature for udon, but the GABA content was not changed greatly depending on each temperature for soba.

Therefore, it was recognized that the GABA in soba is increased by maintaining the aging temperature between 5 and 80 °Cs during the manufacturing process of soba in the case of mixing the barley flour with the usual materials and using 100% soba flour as well as the case of mixing the germinated barley with the usual materials.

### Ninth embodiment

Manufacturing cakes with the soaked barley mixed in materials for cakes

The same as the second embodiment, roll cakes were manufactured with the conventional method using the barley flour. The roll cake which was manufactured with 20% barley flour had the same characteristics as original cakes. Also, cookies which have 100% or 20-50% barley flour were manufactured. Cookies had the same characteristics as original cakes, as well as the above roll cakes.

### Tenth embodiment

Manufacturing of fried foods using the germinated barley flour

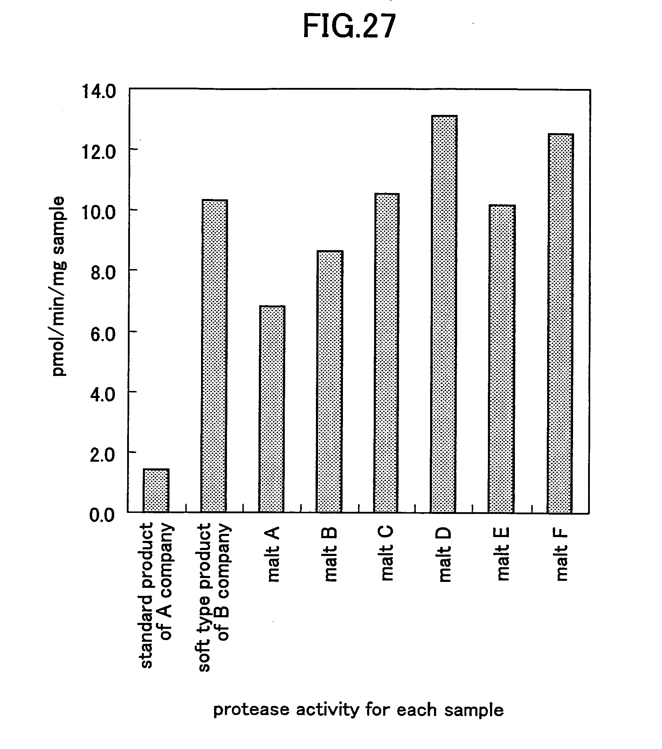

By using 100% the germinated barley flour which was controlled in the germination day or by mixing 50% of the above flour with fried chicken flour, fried chicken was cooked with the conventional method, and it was compared with fried chicken cooked with 100% fried chicken flour. As a result of taste sampling, because fried chicken cooked with barley flour includes lots of amino acids as ingredients for taste, fried chicken cooked with barley flour tasted good. Also, the above barley flour includes protease activity (figure 27) the same as fried chicken flour which allows soft meat (product of B company: mixed with protease). Thereby, mixing the above barley flour with.fried chicken flour, it was expected that fried chicken would have included lots of GABA and other free amino acids; also a feeling of appetite of the fried chicken being soft due to the protease can be provided.

In addition, similar to the above foods, in a manufacturing process of edible covering of fried foods, functional ingredients contents in the edible covering can be increased by controlling the manufacturing process.

The present invention is not limited to the specifically disclosed embodiments, and variations and modifications may be made without departing from the scope of the present invention.

The present application is based on Japanese priority application No.2003-424744 filed on December 22, 2003, and No.2004-175698 filed on June 14, 2004, the entire contents of which are hereby incorporated by reference.

## Claims

1. A food or food product using grains as materials,
**characterized in that** functional ingredients contents are increased by controlling manufacturing conditions in at least one step during a manufacturing process of the food or food product.

2. The food or food product as claimed in claim 1,
wherein wheat, barley, and soba are said grains as materials.

3. A food or food product using one or more of wheat, barley, oats and rye, or a processed product of one or more of wheat, barley, oats and rye,
**characterized in that** functional ingredients contents are increased by controlling manufacturing conditions in at least one step during a manufacturing process of the food or food product.

4. The food or food product as claimed in any one of claims 1-3,
**characterized in that** said food or food product is one of bread, pasta, udon and soba.

5. The food or food product as claimed in any one of claims 1-4,
wherein the manufacturing process is a kneading process.

6. The food or food product as claimed in any one of claims 1-4,
wherein the manufacturing process is a fermentation process.

7. The food or food product as claimed in any one of claims 1-4,
wherein the manufacturing process is an aging process.

8. The food or food product as claimed in any one of claims 3-7,
wherein said processed product of the one or more of wheat, barley, oats and rye is a seed of the one or more of wheat, barley, oats and rye soaked in water or hot water, a germinated seed of the one or more of wheat, barley, oats and rye depending on germination time, or malt, in which malt a seed of the one or more of wheat, barley, oats and rye is soaked in water or hot water to be germinated, then a drying process or a roast-dry process is performed.

9. A method of processing a food or food product using grains as materials,
**characterized in that** functional ingredients contents are increased by controlling manufacturing conditions in at least one step during a manufacturing process of the food or food product.

10. A method of processing a food or food product using one or more of wheat, barley, oats and rye, or a processed product of the one or more of wheat, barley, oats and rye,
**characterized in that** functional ingredients contents are increased by controlling manufacturing conditions in at least one step during a manufacturing process of the food or food product.

11. The method of processing a food or food product as claimed in claims 9 or 10,
wherein the manufacturing process is a kneading process.

12. The method of processing a food or food product as claimed in claims 9 or 10,
wherein the manufacturing process is a fermentation process.

13. The method of processing a food or food product as claimed in claims 9 or 10,
wherein the manufacturing process is an aging process.

14. The method of processing a food or food product as claimed in any one of claims 10-13,
wherein said processed product of one or more of wheat, barley, oats and rye is a seed of the one or more of wheat, barley, oats and rye soaked in water or hot water, a germinated seed of the one or more of wheat, barley, oats and rye depending on germination time, or malt, in which malt a seed of the one or more of wheat, barley, oats and rye is soaked in water or hot water to be germinated, then a drying process or a roast-dry process is performed.

15. A method of processing a food or food product,
**characterized in that** said food or food product is one of bread, pasta, udon and soba.

16. A fried food or food product using one or more of wheat, barley, oats and rye or flour of a processed product of the one or more of wheat, barley, oats and rye,
**characterized in that** said flour of the processed product of the one or more of wheat, barley, oats and rye is a seed of the one or more of wheat, barley, oats and rye soaked in water or hot water, a germinated seed of the one or more of wheat, barley, oats and rye depending on germination time, or malt, in which malt a seed of the one or more of wheat, barley, oats and rye is soaked in water or hot water to be germinated, then a drying process or a roast-dry process is performed.
